# EUROPEAN PATENT SPECIFICATION

(11) **EP 1 479 191 B1**
(45) Date of publication and mention of the grant of the patent: **13.08.2008**
(21) Application number: 02730949.1
(22) Date of filing: 21.05.2002
(51) Int. Cl.: G06F 17/30, H04L 12/26

(54) **SYSTEM AND METHOD FOR INTERCEPTING NETWORK ACCESS**
SYSTEM UND VERFAHREN ZUM ABFANGEN EINES NETZWERKZUGRIFFS
SYSTEME ET PROCEDE DESTINE A INTERCEPTER UN ACCES RESEAU

(30) Priority: 26.02.2002 KR 2002010156
(43) Date of publication of application: 24.11.2004
(73) Proprietor: Netpia.Com, Inc., Seoul 150-038 (KR)
(72) Inventor: LEE, Pan-Jung, Youngdeungpo-Gu Seoul 150-729 (KR); BAE, Jeen-Hyun, Seoul 151-812 (KR); CHO, Byung-Chul, Seoul 150-038 (KR)
(74) Representative: Habasque, Etienne J. Jean-François
(86) International application number: PCT/KR2002/000955
(87) International publication number: WO 2003/073696

(56) References cited:
- WO-A-01/55873
- WO-A-01/98934
- KR-A- 20010 002 535
- KR-A- 20020 027 702
- KR-A- 20020 074 334
- KR-B1- 100 329 545
- US-A- 5 835 727
- US-A- 6 065 056

## Description

### BACKGROUND OF THE INVENTION

### (a) Field of the Invention

The present invention relates to a network access intercepting system and method. More specifically, the present invention relates to a system and method for selectively intercepting access to a predetermined site on a network including the Internet.

### (b) Description of the Related Art

Various types of globally proliferated information have come to be shared through the Internet, a huge network, according to recent network technique developments, and hence sites for providing various services through the Internet have also increased.

In this progression, harmful sites that provide bad information have also been activated. Related to this, some people have voiced their opinions about protecting youngsters, and accordingly, solutions for preventing them from accessing the harmful sites have been developed.

The methods for intercepting access to predetermined sites such as harmful sites are classified as client-centered and server-centered methods.

The client-centered method is a method for installing pornography-intercepting software in each PC, and intercepting an access request when the access request to a predetermined site previously registered to a database is provided, said method having been used in earlier times.

However, the above-noted method does not fluently distribute programs, and it is annoying to reinstall the corresponding software each time the O/S (operating system) is installed.

In the server-centered method, also referred to as a proxy server method, the proxy server intercepts access to a predetermined site when an access request to the previously registered predetermined site is provided. In this method, there is no need to install a program in each client computer, but it is required to reconfigure a network so that all the users on the network must use the corresponding proxy server, and it is further required to configure a different network for each user group so as to provide a different grade to each group.

"WO 01/98934 describes internet content filtering software comprising two components. One component runs on an internet server and the other runs locally on a user computer. The two components cooperate with one another to filter internet content, with each component performing separate tasks. The internet server component stores user profiles, a list and/or table of permitted and prohibited URLs, and receives redirected URL requests. Redirected URL requests are utilized, in conjunction with a user profile, to determine whether access is granted or denied to the content associated with the URL. The component running locally on a user computer system acts as a client to the internet server component, performing logon functions for a user, scanning internet content associated with permitted URLs, and updating the internet server component with a URL, indicating that the URL is prohibited if a predefined word or phrase is located in the internet content associated with the URL.

WO 01/55873 describes a method and system for providing flexible access to internet sites. The system includes a database of internet sites that have been categorised so that the system determines the category of information that a user is accessing on the internet. The system is also programmed so users are only allowed to access sites within a particular category a limited number of times. Moreover, users can request a postponed access, wherein the site they are requesting is stored on a server and available to the user at a later time. In addition, if a user chooses to access a site that is within a certain predefined categories, they are presented with the option of retrieving the page but notified that their access will be logged to a file.

US 6,065,056 describes a system for blocking undesirable activities of computer use. A monitoring application entitled "X-Stop" is run in the background of a computer that has access to the internet. The application X-Stop contains a keyboard module, a mouse module, a clipboard module and a winsock module. Each module monitors data being passed into and out of the topmost application of the computer and compares the data to that stored in libraries stored in memory. If a match is found in a library, a blocking routine is initiated and a text box is displayed for an unblocking password to be entered by a supervisor.

With the above goal in mind, the present invention is a system for controlling access interception between a plurality of first hosts and second hosts through a network according to claims 1, and a method for controlling access interception between a plurality of first hosts and second hosts through a network in a system according to claim 7.

Other features of the invention are found in the dependent claims.

### SUMMARY OF THE INVENTION

It is an advantage of the present invention to provide an access intercepting service of predetermined sites to users who desire access interception.

In particular, it is an advantage of the present invention to intercept access to predetermined sites without installation of an additional program for site access interception, and without network reconfiguration.

In one aspect of the present invention, an access intercepting system connected to a plurality of first hosts and second hosts through a network comprises: an interception information database for storing information on the second hosts which are access interception targets, and information on interception setting; a network monitor for monitoring a generation state of transmission packets from the first host on the network, and receiving the generated transmission packets; an access processor for determining whether a destination included in the received transmission packets is an access interception target on the basis of information stored in the interception information database; and a packet generator for generating an access interception packet, and transmitting the same to the first host so that the first host may stop the network access attempt, when the destination of the transmission packets is an access interception target according to the determination result.

The access interception packet includes an ICMP (Internet control message protocol) message format having a "network unreachable" code, and the first host determines that the network is unreachable and stops the access attempt to the second host when receiving the access interception packet.

The access interception system receives IP addresses of the first hosts that have requested access interception from an ISP (Internet service provider), and the access processor determines whether the destination of the transmission packets is an access interception target and selectively performs access interception processing when the IP address of the first host that has generated the transmission packets corresponds to the IP address provided by the ISP.

Interception setting information stored in the interception information database includes a date and time for interception of the second host that is an access interception target, and the access processor controls the packet generator to perform access interception processing when it is established that the access interception target is to be intercepted on the current date or time in the case the destination of the transmission packets is an access interception target.

The interception setting information includes authentication of the user who has requested the access interception, and the access processor performs modification of the date or time and interception cancellation according to a request by the authenticated user.

The first hosts are connected to a switching hub, and the access interception system monitors the packets generated by the first hosts and transmits/receives the packets through a dummy hub connected to the switching hub.

In another aspect of the present invention, a method for controlling access interception between a plurality of first hosts and second hosts through a network comprises: (a) monitoring a generation state of transmission packets from the first host on the network; (b) receiving the transmission packets generated by the first host on the network; (c) determining whether the second host that is a destination included in the received transmission packets is an access interception target; and (d) generating an access interception packet when the second host that is the destination of the transmission packets is an access interception target according to the determination result, and transmitting the access interception packet to the first host so that the first host may stop the network access attempt.

The (a) comprises: receiving IP addresses of the first hosts that have requested access interception by an ISP; determining whether the IP address of the first host that has generated the transmission packet corresponds to the IP address provided by the ISP; and determining whether the second host that is a destination of the transmission packet is an access interception target when the IP address of the first host that has generated the transmission packet corresponds to the IP address provided by the ISP according to the determination result.

The method further comprises: receiving a desired cancellation date or time of the second host that is an access interception target from the first host user, and setting the date and time; and modifying the date or time and performing access cancellation for an authenticated user, and (d) further comprises generating an access interception packet and transmitting the access interception packet to the first host when the second host that is a destination of the transmission packet is an access interception target and the second host is set to be access-intercepted on the current date or time.

### BRIEF DESCRIPTION OF THE DRAWINGS

The accompanying drawings, which are incorporated in and constitute a part of the specification, illustrate an embodiment of the invention, and together with the description, serve to explain the principles of the invention:
FIG. 1 shows a general TCP/IP architecture layer;
FIG. 2 shows a configuration of a network access intercepting system according to a preferred embodiment of the present invention;
FIG. 3 shows a configuration diagram of an access intercepting packet according to a preferred embodiment of the present invention; and
FIG. 4 shows a flowchart of a network access intercepting process according to a preferred embodiment of the present invention.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

Some users provided independent networks in earlier times, and accordingly, the users had to set communication hardware environments according to their network specifications. But since no single network that supports all kinds of network specs existed, it was impossible to build a wide network using a single hardware specification.

To solve this problem, the TCP/IP (transmission control protocol/Internet protocol) for communication between different devices has been developed, and it has become the basis for the packet switching network, the ARPANET (advanced research projects agency network). The TCP/IP technique has formed a foundation for building the world wide Internet where homes, campuses, schools, business enterprises, and governmental research centers are connected.

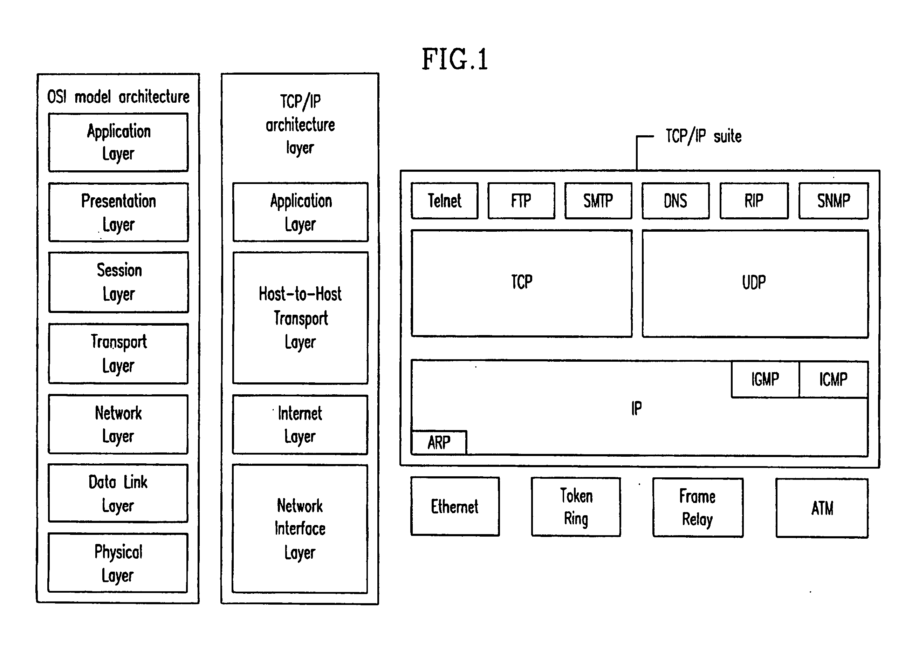

FIG. 1 shows a general TCP/IP architecture layer. As shown, the TCP/IP comprises an application layer, a host-to-host transport layer, an Internet layer, and a network interface layer.

The Internet layer is used to set the path of data from a transmitter host to a receiver host that is a destination, and comprises an IP (Internet protocol), an ICMP (Internet control message protocol), an IGMP (Internet group management protocol), and an ARP (address resolution protocol).

The IP is a protocol for controlling transmission and receipt of data packets (datagram) in a network and between networks, and it is matched with a network layer in the OSI model. The ICMP is a protocol for controlling messages between a host server and an Internet gateway, and for notifying of errors. Control messages of the ICMP are loaded into a data unit of an IP datagram, and then transmitted, and they have functions of controlling transmission errors, testing whether the final destination is reached, reporting to the original host, controlling transmission rates when the transmission rates cannot be processed by a host or a gateway, and requesting modification of a communication path from a gateway.

In the preferred embodiment of the present invention, the ICMP having the above-noted functions is used to detect whether the network connection state is physically bad, and to refuse receipt of packets transmitted from a predetermined host.

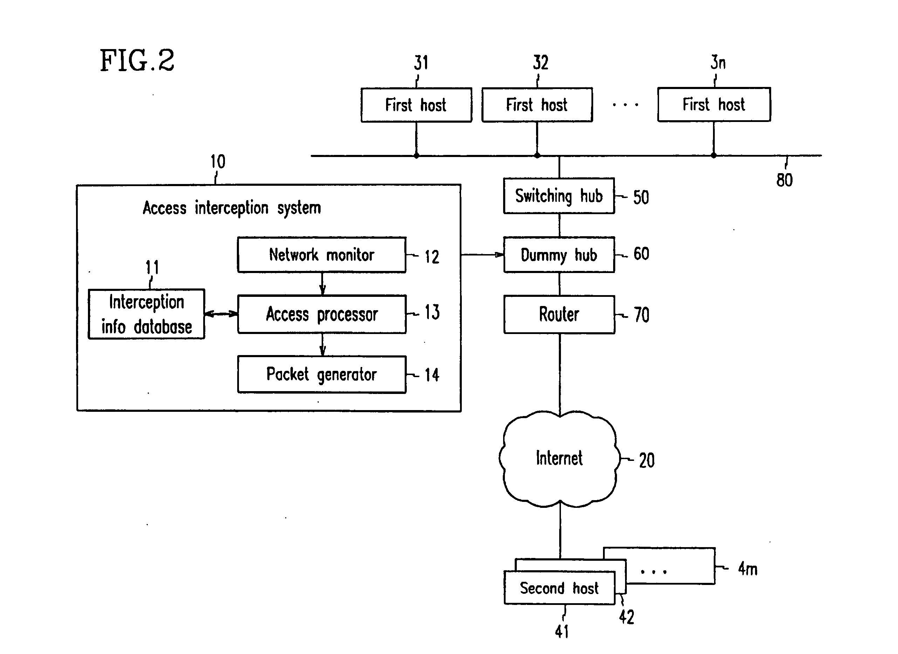

FIG. 2 shows an access intercepting system according to a preferred embodiment of the present invention.

The access intercepting system 10 is connected to first hosts 31 through 3n and second hosts 41 through 4n through the Internet 20. In detail, the access intercepting system 10 is connected to a dummy hub 60 connected to a switching hub 50 for connecting to the first hosts 31 through 3n; and the dummy hub 60 is connected to the Internet 20 through a router 70, and the second hosts 41 through 4n are connected to the Internet 20. Therefore, the access intercepting system 10 transmits and receives packets to/from the first hosts 31 to 3n through the dummy hub 60 and the switching hub 50, and it also transmits and receives packets to/from the second hosts 41 to 4n through the dummy hub 60, the router 70, and the Internet 20.

In this instance, for ease of description without being restricted thereto, a host that attempts access, i.e. a computer that allows bidirectional communication with other computers through the Internet, is referred to as the "first host," and a host that is accessed, such as a site, is referred to as the "second host."

Since the first hosts 31 through 3n are connected to a plurality of ports of the switching hub 50, data generated from the first hosts 31 through 3n connected to the respective ports are input to the switching hub 50 and then transmitted, and the switching hub 50 analyzes the data, selects a destination, and sends the data to the destination, or when port mirroring is not set, the switching hub 50 broadcasts them. Here, the switching hub is used for improvements of network rates, and further, a general hub can also be used.

Since the dummy hub 60 only operates in the broadcasting method, the dummy hub 60 connects the switching hub 50 with the access intercepting system when the switching hub 50 does not support port mirroring.

The router 70 is a device for connecting separated networks using the same transmission protocol, and it connects network layers to transmit data. That is, the router 70 determines a node of another network or a network of the router 70 according to a path allocation table, and it also selects the most effective path from among many paths and transmits data.

The access intercepting system 10 connected to the dummy hub 60, for intercepting the access to predetermined sites, comprises an interception information database 11, a network monitor 12, an access processor 13, and a packet generator 14.

The interception information database 11 stores information on the second hosts which are targets of access interception, and information on interception setting (i.e., a date, a period, a time to be intercepted, and authentication information of an interception requester), for example information including IP addresses of the second hosts corresponding to pornography sites, and URLs (uniform resource locators). In addition, it may further store information on access interception requesters (e.g., IP addresses) provided by ISPs (Internet service providers) so as to intercept the access of the first hosts that have requested the access interception.

The network monitor 12 monitors packet transmission states on the network through the dummy hub 60 to receive broadcasted packets.

The access processor 13 determines whether to access the corresponding destination according to whether the interception information database 11 stores a destination address to which the packets received by the network monitor 12 are to be transmitted.

The packet generator 14 generates access interception packets, and transmits them to the first host that has transmitted corresponding packets (referred to as transmission packets hereinafter) so that the first host may detect that the current network is unreachable, when the destination to which the transmission packets are to be transmitted corresponds to an access interception target host according to the determination result from the access processor 13.

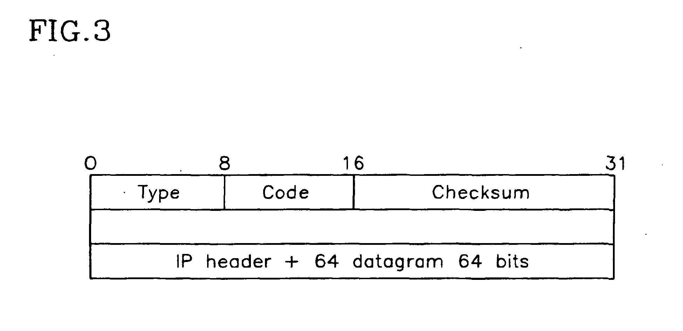

The access interception packets are generated in the ICMP message format. FIG. 3 shows a brief configuration of the ICMP message.

The access interception packet is an ICMP message having a 64-bit header, and as shown in FIG. 3, it can be one of a plurality of types each of which has a plurality of codes. It also includes a checksum that represents a number of bits in a transmission unit so that a receiver part may check whether the same number of bits has arrived, thereby detecting receiving errors.

In this instance, a "network unreachable" code is recorded on the codes and transmitted so that the first host detects that the network is unreachable. Therefore, the first host stops the access attempt according to the network unreachable status, and when a response packet is sent from the second host which is the packet's destination, the first host does not receives it.

Next, a method for intercepting access to a predetermined host on the basis of the above-configured access intercepting system will be described.

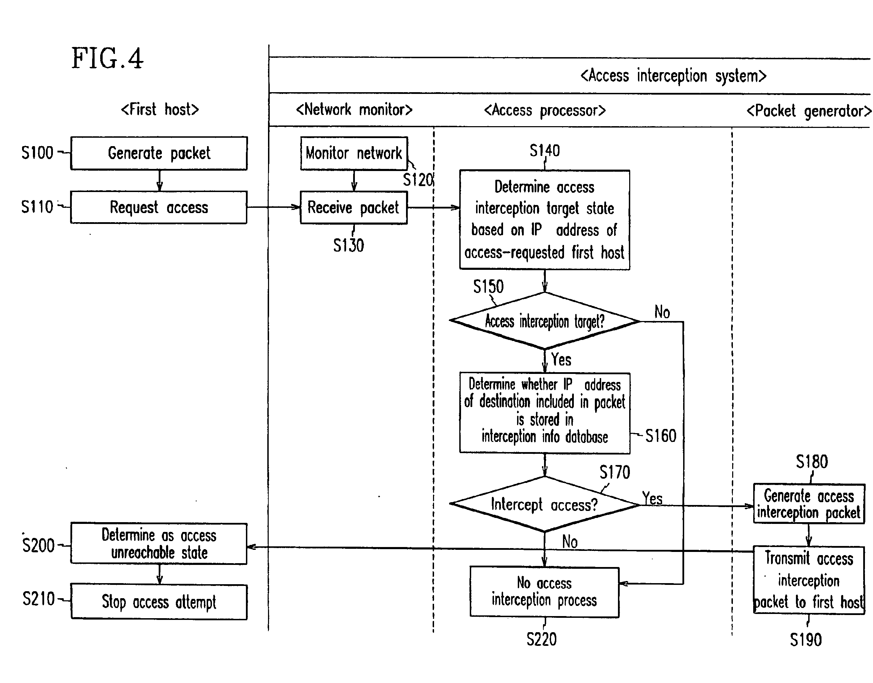

FIG. 4 shows a flowchart for an access intercepting process according to a preferred embodiment of the present invention.

The access intercepting system 10 operates in the mode for monitoring packet generation states on the network, such as a promiscuous mode.

In this state, as shown in FIG. 4, the first host 31 for attempting to access the second host that is a predetermined site connected to the Internet 20 generates transmission packets including an address of the second host that the destination desires to access in step S100.

As described, the transmission packets generated by the respective first hosts are transmitted to the switching hub 50 through corresponding ports, and the switching hub 50 broadcasts the transmission packets in step S110. Therefore, the transmission packets are transmitted to another first host connected to a LAN 80, and also to the access intercepting system 10 connected to the dummy hub 60. They are further transmitted to the second host 41 that is the corresponding destination through the router 70.

The network monitor 12 of the access intercepting system 10 operates in the promiscuous mode and uses the port mirroring function to monitor the network in step S120, and when the transmission packets are transmitted from the first host, the network monitor 12 receives the broadcasted transmission packets and provides them to the access processor 13 in step S130.

First, the access processor 13 determines whether the first host that has transmitted the transmission packets is a user who has requested an access intercepting service in steps S140 and S150.

In the preferred embodiment of the present invention, in order to intercept the users who have requested the Internet interception service from the ISP without intercepting all the ISP subscribers, when an ISP subscriber requests access to a predetermined site (a second host), the ISP registers the corresponding subscriber as an access intercepting requester, and provides corresponding information to the access intercepting system.

In this instance, the interception information database 11 stores information on the access interception requester (e.g., an IP address), the access processor 13 determines whether the IP address of the first host 31 that has generated the transmission packets corresponds to the access interception requester provided from the ISP on the basis of the information stored in the interception information database 11, and when the IP address corresponds to the access interception requester, the information in the interception information database 11 is used to determine whether the destination of the corresponding transmission packets is an interception target.

That is, the access processor 13 analyzes the transmission packets provided from the network monitor 12 to find a destination address to which the transmission packets will be transmitted, and determines whether the destination address is stored in the interception information database 11 in step S160.

When the destination address of the transmission packets is stored in the interception information database 11, the access processor 13 determines that the destination of the transmission packets is an access interception target such as a pornography site, so it controls the packet generator 14 to generate an access interception packet that has the access-requested first host as a destination in the ICMP message format having a "network unreachable" code, so that no packet may be transmitted and received between the first host that had requested the access and the second host that is an access target in steps S170 and S180.

The access interception packet generated by the packet generator 14 is transmitted to the switching hub 50 through the dummy hub 60, and the switching hub 50 transmits the access interception packet to the corresponding first host 31 according to the destination address of the transmitted access interception packet in step S190.

When the access interception packet is transmitted after the access request, and the code of the access interception packet is a "network unreachable" code, the first host 31 determines that access to the second host is impossible, and stops the access attempt in steps S200 and S210. This is the same as the case in which access to a corresponding site is impossible because a LAN cable is disconnected or a router has some working problems.

Therefore, when the second host (e.g., a pornography site) that has received the transmission packets through the router 70 generates a response packet in which the first host that has transmitted the transmission packets to the destination is recorded, and transmits the response packet to the first host, the response packet is not received by the first host since the first host has already stopped the access attempt according to the network unreachable state.

As a result, when an access interception program is not installed in each first host, and the network is not configured such that all the first hosts must use a designated proxy server, access interception of predetermined sites is easily obtained.

When the destination address of the transmission packets is not stored in the interception information database 11, it is determined that the destination of the transmission packets is not an access interception target, and the access interception is not performed. Therefore, in this case, when the transmission packets broadcasted on the network are transmitted to the second host 41 that is the corresponding destination through the router 70, the second host 41 generates a response packet matched with the transmission packet, and transmits the same to the first host 31. Accordingly, the packets are transmitted and received between the first host 31 and the second host 41, and the first host 31 obtains desired information from the second host 41 in step S220.

The above-noted access interception can be applied in ISP-sized networks and in small networks such as a LAN.

Steps S140 and S150 for determining whether the first host is a user who requested the access interception can be omitted. That is, by only checking whether the destination of the transmission packet corresponds to the access interception target without checking whether the first host that has generated the transmission packets is a user who has requested the access interception, the access to a predetermined host can be intercepted as described above.

Also, by setting the second hosts for performing access interception for each first host, the access to a predetermined host for each first host can be intercepted.

Further, the access interception can only be executed for the access interception requester by separation of month, date, and year. That is, the access interception requester can request access interception of a predetermined address at a specific date or time, and accordingly, the above-mentioned access interception can be performed when the destination address to which the transmission packets are to be transmitted is an access interception target and the access interception is set on the current date and time. In this case, it is required to store authentication information of the requester in the interception information database so that only the corresponding requester may establish access interception or cancellation, and the access interception system authenticates the requester on the basis of the authentication information, and executes access interception or cancellation. In this instance, the interception establishment information stored in the interception information database includes a date, a period, time, and the interception requester's authentication information for interception of a specific second host for each first host.

As described above, when an access interception program is not installed in all the clients, and the network is not configured such that all the clients must use a specific proxy server, the access interception of a specific site is easily achieved.

Also, access to predetermined sites can be easily intercepted without modification of conventional network configurations.

Further, the access interception can be performed for specific IP addresses.

Therefore, overloads of bandwidths can be reduced by intercepting unneeded access requests on the network.

While this invention has been described in connection with what is presently considered to be the most practical and preferred embodiment, it is to be understood that the invention is not limited to the disclosed embodiments, but, on the contrary, is intended to cover various modifications and equivalent arrangements included within the scope of the appended claims.

## Claims

1. A system (10) for controlling access interception between a plurality of first hosts (3n) and second hosts (4m) through a network, comprising:
an interception information database (11) for storing information on the second hosts that are access interception targets, and information on interception setting;
a network monitor (12) for monitoring a generation state of transmission packets from the first host on the network, and receiving the generated transmission packets;
an access processor (13) for determining whether a destination included in the received transmission packets is an access interception target on the basis of information stored in the interception information database; and
a packet generator (14) for generating an access interception packet having a network unreachable code, and transmitting the same to the first host so that the first host may stop the network access attempt, when the destination of the transmission packets is an access interception target according to the determination result,
wherein the system is connected to a hub (50) being located at a position where data between the first host (3n) and the second host (4m) passes through, and is adapted to transmit the transmission packet generated by the first host to the second host, and the network monitor (12) is adapted to monitor the transmission packets generated by the first hosts using a port mirroring function.

2. The system of claim 1, wherein the access interpretation packet includes an ICMP (Internet control message protocol) message format having a "network unreachable" code, and the first host is adapted to determine that the network is unreachable and to stop the access attempt to the second host when receiving the access interception packet.

3. The system of claim 1, wherein the access interception system is adapted to receive IP addresses of the first hosts that have requested access interception from a ISP (Internet service provider), and the access processor is adapted to determine whether the destination of the transmission packets is an access interception target and to selectively perform access interception processing, when the IP address of the first host that has generated the transmission packets corresponds to the IP address provided by the ISP.

4. The system of claim 1, where in interception setting information stored in the interception information database includes a date and time for interception of the second host that is an access interception target, and the access processor is adapted to control the packet generator to perform access interception processing when it is established that the access interception target is to be intercepted on the current date or time in the case the destination of the transmission packets is an access interception target.

5. The system of claim 1, wherein the interception setting information includes authentication of the user who has requested the access interception, and the access processor is adapted to perform modification of the date or time and interception cancellation according to a request by the authenticated user.

6. The system of claim 1, wherein the first hosts are connected to a switching hub, and the access interception system is adapted to monitor the packets generated by the first hosts and to transmit/receive the packets through a dummy hub connected to the switching hub.

7. A method for controlling access interception between a plurality of first hosts (3n) and second hosts (4m) through a network in a system (10), comprising:
(a) monitoring, by the system (10), of a generation state of transmission packets from the first host on the network;
(b) receiving, by the system (10), the transmission packets generated by the first host on the network;
(c) determining, by the system (10), whether the second host that is a destination included in the received transmission packets is an access interception target; and
(d) generating, by the system (10), an access interception packet having a network unreachable code when the second host that is the destination of the transmission packets is an access interception target according to the determination result, and transmitting the access interception packet to the first host so that the first host may stop the network access attempt,
wherein the system (10) is connected to a hub (50) being located at a position where data between the first host (3n) and the second host (4m) passes through, and the transmission packet generated by the first host is transmitted to the second host, and a network monitor (12), comprised in the system (10), monitors the transmission packets generated by the first host using a port mirroring function.

8. The method of claim 7, wherein (a) comprises:
receiving IP addresses of the first hosts that have requested the access interception from an ISP (Internet service provider);
determining whether the IP address of the first host that has generated the transmission packet corresponds to the IP address provided by the ISP; and
determining whether the second host that is the destination of the transmission packet is an access interception target when the IP address of the first host that has generated the transmission packet corresponds to the IP address provided by the ISP according to the determination result.

9. The method of claim 7, further comprising:
receiving a desired interception date or time of the second host that is an access interception target from the first host user, and setting the date and time; and
modifying the date or time and performing access cancellation for an authenticated user, and (d) further comprises generating an access interception packet and transmitting the access interception packet to the first host when the second host that is a destination of the transmission packet is an access interception target and the second host is set to be access-intercepted on the current date or time.

## Patentansprüche

1. Ein System (10) zur Steuerung der Unterbindung von Zugängen zwischen einer Mehrzahl von ersten Hosts (3n) und zweiten Hosts (4m) über ein Netzwerk, aufweisend:
eine Unterbindungsinformationsdatenbank (11) zum Speichern von Information über die zweiten Hosts, die Zugangsunterbindungsziele sind, und Information über die Unterbindungseinstellungen;
einen Netzwerkmonitor (12) zum Überwachen eines Erzeugungszustandes von Übertragungspaketen von den ersten Hosts in dem Netzwerk und Empfangen der erzeugten Übertragungspakete;
einen Zugangsprozessor (13) zum Bestimmen, ob ein Bestimmungsort, der in den empfangenen Übertragungspaketen enthalten ist, ein Zugangsunterbindungsziel ist basierend auf Information, die in der Unterbindungsinformationsdatenbank gespeichert ist; und
einen Paketgenerator (14) zum Erzeugen eines Zugangsunterbindungspakets mit einem Netzwerkunerreichbaren Code und Übertragen desselben an den ersten Host, so das der erste Host den Netzwerkzugangsversuch stoppen kann, wenn der Bestimmungsort des Übertragungspakets ein Zugangsunterbindungsziel ist nach dem Bestimmungsergebnis,
wobei das System mit einem Hub (50) verbunden ist, der an einer Position angeordnet ist, an der die Daten zwischen dem ersten Host (3n) und dem zweiten Host (4m) durchlaufen, und der dazu eingerichtet ist, das durch den ersten Host erzeugte Übertragungspaket an den zweiten Host zu übertragen, und der Netzwerkmonitor (12) dazu eingerichtet ist, die durch die ersten Host erzeugten Übertragungspakete unter Verwendung einer Portspiegelungsfunktion zu überwachen.

2. System gemäß Anspruch 1, wobei das Zugangsunterbindungspaket ein ICMP (Internet Control Message Protocol)-Nachrichtenformat mit einem Netzwerkunerreichbaren Code aufweist und der erste Host dazu eingerichtet ist, zu bestimmen, dass das Netzwerk unerreichbar ist, und den Versuch des Zugangs zu dem zweiten Host zu stoppen, wenn das Zugangsunterbindungspaket empfangen wird.

3. System gemäß Anspruch 1, wobei das Zugangsunterbindungssystem dazu eingerichtet ist, IP-Adressen der ersten Hosts zu empfangen, die eine Zugangsunterbindung von dem ISP (Internet Service Provider) angefordert haben, und der Zugangsprozessor dazu eingerichtet ist, zu bestimmen, ob der Bestimmungsort der Übertragungspakete ein Zugangsunterbindungsziel ist, und selektiv eine Zugangsunterbindungsverarbeitung durchzuführen, wenn die IP-Adressen des ersten Hosts, der die Übertragungspakete erzeugt hat, mit der durch den ISP bereitgestellten IP-Adresse korrespondiert.

4. System gemäß Anspruch 1, wobei eine Unterbindungsinformationsdatenbank ein Datum und eine Zeit zum Unterbinden des zweiten Hosts enthält, der ein Zugangsunterbindungsziel ist, und der Zugangsprozessor dazu eingerichtet ist, den Paketgenerator zu steuern, eine Zugangsunterbindungsverarbeitung durchzuführen, wenn feststeht, dass zum aktuellen Datum oder zur aktuellen Zeit das Zugangsunterbindungsziel zu Unterbrechen ist, falls der Bestimmungsort des Übertragungspakets ein Zugangsunterbindungsziel ist.

5. System gemäß Anspruch 1, wobei die Unterbindungseinstellungsinformation eine Authentifizierung des Benutzers enthält, der die Zugangsunterbindung angefordert hat, und der Zugangsprozessor dazu eingerichtet ist, eine Modifizierung des Datums oder der Zeit durchzuführen und einen Widerruf der Unterbindung gemäß einer Anfrage des authentifizierten Benutzers durchzuführen.

6. System gemäß Anspruch 1, wobei die ersten Hosts mit einem schaltenden Hub verbunden sind, und das Zugangsunterbindungssystem dazu eingerichtet ist, die durch die ersten Hosts erzeugten Pakete zu überwachen und die Pakete durch einen Dummy-Hub zu übertragen/zu empfangen, der mit dem schaltenden Hub verbunden ist.

7. Ein Verfahren zum Steuern der Unterbindung von Zugängen zwischen einer Mehrzahl von ersten Hosts (3n) und zweiten Hosts (4m) über ein Netzwerk in einem System (10), aufweisend:
(a) Überwachen, durch das System (10), eines Erzeugungszustandes von Übertragungspaketen von dem ersten Host in dem Netzwerk;
(b) Empfangen, durch das System (10), der durch den ersten Host in dem Netzwerk erzeugten Übertragungspakete;
(c) Bestimmen, durch das System (10), ob der zweite Host, der ein in den empfangenen Übertragungspaketen enthaltener Bestimmungsort ist, ein Zugangsunterbindungsziel ist; und
(d) Erzeugen, durch das System (10), eines Zugangsunterbindungspakets mit einem Netzwerkunerreichbaren Code, wenn der zweite Host, der der Bestimmungsort der Übertragungspakete ist, ein Zugangsunterbindungsziel ist nach dem Bestimmungsergebnis, und Übertragen des Zugangsunterbindungspakets an den ersten Host, so dass der erste Host den Netzwerkzugangsversuch stoppen kann,
wobei das System mit einem Hub (50) verbunden ist, der an einer Position angeordnet ist, an der die Daten zwischen dem ersten Host (3n) und dem zweiten Host (4m) durchlaufen, und das durch den ersten Host erzeugte Übertragungspaket an den zweiten Host zu übertragen wird, und ein Netzwerkmonitor (12), der in dem System (10) enthalten ist, die durch den ersten Host erzeugten Übertragungspakete unter Verwendung einer Portspiegelungsfunktion überwacht.

8. Verfahren gemäß Anspruch 7, wobei (a) aufweist:
Empfangen von IP-Adressen der ersten Host, die die Zugangsunterbindung von einem ISP (Internet Service Provider) angefordert haben;
Bestimmen, ob die IP-Adresse des ersten Hosts, der die Übertragungspakete erzeugt hat, mit der durch den ISP bereitgestellten IP-Adresse korrespondiert; und
Bestimmen, ob der zweite Host, der der Bestimmungsort des Übertragungspakets ist, ein Zugangsunterbindungsziel ist, wenn die IP-Adresse des ersten Hosts, der das Übertragungspaket erzeugt hat, mit der durch den ISP bereitgestellten IP-Adresse korrespondiert nach dem Bestimmungsergebnis.

9. Verfahren gemäß Anspruch 7, ferner aufweisend:
Empfangen eines gewünschten Unterbrechungsdatums oder einer gewünschten Unterbrechungszeit des zweiten Hosts, der ein Zugangsunterbindungsziel ist, von dem ersten Host-Benutzer, und Setzen des Datums und der Zeit; und
Modifizieren des Datums oder der Zeit und Durchführen eines Zugangswiderrufs für einen authentifizierten Benutzer, und (d) ferner aufweisend Erzeugen eines Zugangsunterbindungspakets und Übertragen des Zugangsunterbindungspakets an den ersten Host, wenn der zweite Host, der eine Bestimmungsort des Übertragungspakets ist, ein Zugangsunterbindungsziel ist und der zweite Host gesetzt ist, zum aktuellen Datum oder zur aktuellen Zeit Zugangs-Abgeschnitten zu sein.

## Revendications

1. Système (10) pour commander l'interception d'accès entre une pluralité de premiers hôtes (3n) et de seconds hôtes (4m) à travers un réseau, comprenant :
une base de données d'informations d'interception (11) pour stocker des informations sur les seconds hôtes qui sont des cibles d'interception d'accès, et des informations de réglage d'interception ;
un moniteur de réseau (12) pour surveiller un état de génération de paquets de transmission à partir du premier hôte sur le réseau, et recevoir les paquets de transmission générés ;
un processeur d'accès (13) pour déterminer si une destination incluse dans les paquets de transmission reçus est une cible d'interception d'accès sur la base des informations stockées dans la base de données d'informations d'interception ; et
un générateur de paquet (14) pour générer un paquet d'interception d'accès ayant un code de réseau injoignable, et transmettre celui-ci au premier hôte de sorte que le premier hôte peut arrêter la tentative d'accès de réseau, lorsque la destination des paquets de transmission est une cible d'interception d'accès selon le résultat de détermination,
dans lequel le système est connecté à un hub (50) qui est situé à une position à travers laquelle passent les données entre le premier hôte (3n) et le second hôte (4m), et est adapté pour transmettre le paquet de transmission généré par le premier hôte au second hôte, et le moniteur de réseau (12) est adapté pour surveiller les paquets de transmission générés par les premiers hôtes en utilisant une fonction de mise en miroir de port.

2. Système selon la revendication 1, dans lequel le paquet d'interception d'accès comprend un format de message ICMP (protocole de message de commande Internet) ayant un code de « réseau injoignable », et le premier hôte est adapté pour déterminer que le réseau est injoignable et pour arrêter la tentative d'accès au second hôte lors de la réception du paquet d'interception d'accès.

3. Système selon la revendication 1, dans lequel le système d'interception d'accès est adapté pour recevoir des adresses IP des premiers hôtes qui ont demandé l'interception d'accès à un FAI (fournisseur d'accès Internet), et le processeur d'accès est adapté pour déterminer si la destination des paquets de transmission est une cible d'interception d'accès et pour effectuer sélectivement le traitement d'interception d'accès, lorsque l'adresse IP du premier hôte qui a généré les paquets de transmission correspond à l'adresse IP fournie par le FAI.

4. Système selon la revendication 1, dans lequel les informations de réglage d'interception mémorisées dans la base de données d'informations d'interception comprennent une date et une heure pour l'interception du second hôte qui est une cible d'interception d'accès, et le processeur d'accès est adapté pour commander le générateur de paquet pour effectuer le traitement d'interception d'accès lorsqu'il est établi que la cible d'interception d'accès doit être interceptée à la date actuelle ou à l'heure actuelle dans le cas où la destination des paquets de transmission est une cible d'interception d'accès.

5. Système selon la revendication 1, dans lequel les informations de réglage d'interception comprennent l'authentification de l'utilisateur qui a demandé l'interception d'accès, et le processeur d'accès est adapté pour effectuer la modification de la date ou de l'heure et l'annulation d'interception selon une requête de l'utilisateur authentifié.

6. Système selon la revendication 1, dans lequel les premiers hôtes sont connectés à un hub de commutation, et le système d'interception d'accès est adapté pour surveiller les paquets générés par les premiers hôtes et transmettre/recevoir les paquets à travers un hub factice connecté au hub de commutation.

7. Procédé pour commander l'interception d'accès entre une pluralité de premiers hôtes (3n) et de seconds hôtes (4m) à travers un réseau dans un système (10), comprenant les étapes consistant à :
(a) surveiller, par le système (10), un état de génération de paquets de transmission du premier hôte sur le réseau ;
(b) recevoir, par le système (10), les paquets de transmission générés par le premier hôte sur le réseau ;
(c) déterminer, par le système (10), si le second hôte qui est une destination incluse dans les paquets de transmission reçus est une cible d'interception d'accès ; et
(d) générer, par le système (10), un paquet d'interception d'accès ayant un code de réseau injoignable lorsque le second hôte qui est la destination des paquets de transmissions est une cible d'interception d'accès selon le résultat de détermination, et transmettre le paquet d'interception d'accès au premier hôte de sorte que le premier hôte peut arrêter la tentative d'accès de réseau,
dans lequel le système (10) est connecté à un hub (50) qui est situé à une position à travers laquelle passent les données entre le premier hôte (3n) et le second hôte (4m), et le paquet de transmission généré par le premier hôte est transmis au second hôte, et un moniteur de réseau (12), compris dans le système (10), surveille les paquets de transmission générés par le premier hôte en utilisant une fonction de mise en miroir de port.

8. Procédé selon la revendication 7, dans lequel l'étape (a) comprend les étapes consistant à :
recevoir des adresses IP des premiers hôtes qui ont demandé l'interception d'accès à un FAI (fournisseur d'accès Internet) ;
déterminer si l'adresse IP du premier hôte qui a généré le paquet de transmission correspond à l'adresse IP fournie par le FAI ; et
déterminer si le second hôte qui est la destination du paquet de transmission est une cible d'interception d'accès lorsque l'adresse IP du premier hôte qui a généré le paquet de transmission correspond à l'adresse IP fournie par le FAI selon le résultat de détermination.

9. Procédé selon la revendication 7, comprenant en outre les étapes consistant à :
recevoir une date ou une heure d'interception souhaitée du second hôte qui est une cible d'interception d'accès du premier utilisateur hôte, et régler la date et l'heure ; et
modifier la date ou l'heure et effectuer l'annulation d'accès pour un utilisateur authentifié, et l'étape (d) comprend en outre l'étape consistant à générer un paquet d'interception d'accès et transmettre le paquet d'interception d'accès au premier hôte lorsque le second hôte qui est une destination du paquet de transmission est une cible d'interception d'accès et le second hôte est réglé pour que son accès soit intercepté à la date actuelle ou à l'heure actuelle.
